# EUROPEAN PATENT SPECIFICATION

(11) **EP 2 139 014 B1**
(45) Date of publication and mention of the grant of the patent: **17.09.2014**
(21) Application number: 09007689.4
(22) Date of filing: 10.06.2009
(51) Int. Cl.: H01H 13/14, H01H 13/20, H01H 13/52

(54) **Push switch and method of manufacturing the same**
Druckschalter und Herstellungsverfahren dafür
Bouton-poussoir et son procédé de fabrication

(30) Priority: 25.06.2008 JP 2008166350
(43) Date of publication of application: 30.12.2009
(73) Proprietor: Alps Electric Co., Ltd., Tokyo 145-8501 (JP)
(72) Inventor: McCurdy, Anthony, Tokyo 145-8501 (JP); Sato, Takashi, Tokyo 145-8501 (JP)
(74) Representative: Klunker . Schmitt-Nilson . Hirsch

(56) References cited:
- EP-A1- 1 071 105
- JP-A- 2006 134 658
- JP-U- 2 025 129
- JP-U- 5 015 246
- JP-U- 63 087 733

## Description

### Cross Reference to Related Applications

The present invention contains subject matter related to Japanese Patent Application No. 2008-166350 filed in the Japanese Patent Office on June 25, 2008.

### BACKGROUND

### 1. Technical Field

The present invention relates to a push switch having a slider which is automatically returned to a predetermined non-operation position by allowing a portion of the slider to come in contact with an inclined surface of a case upon retreating after a pushing operation, and a method of manufacturing the same.

### 2. Related Art

In a prior art, this type of push switch having a configuration in which a slider is supported by a tubular case for raising and lowering, contact convex portions having a square pyramid shape are provided at four corners of a top surface of a large diameter section of the slider, restriction concave portions having complementary shapes to the contact convex portions are provided at four points of a ceiling surface of the tubular case, and the slider is held at a non-operation position while each contact convex portion is substantially fitted to the corresponding restriction concave portion (for an example, refer to U.S. Patent No. 7,164,092 which corresponds to JP-A-2005 □353409). In the prior art, the tubular case is mounted on a printed-circuit board, and the large diameter section of the slider is mounted on tact switches disposed on the printed-circuit board. In addition, the slider is provided with a small diameter section extending upward from the large diameter section and penetrating an insertion opening (upper opening) of the tubular case, and the small diameter section is crowned with an operating knob.

In the existing push switch having the configuration briefly described above, when the slider is pushed through the operating knob, the large diameter section of the slider in the tubular case is lowered, each contact convex portion deviates from the corresponding restriction concave portion, and the large diameter section of the slider pushes the tact switch to be turned on. Thereafter, when the pushing force is removed, the large diameter section of the slider is raised up by the biasing force of an elastic member included in the tact switch, and the tact switch is returned to its OFF state. In addition, each contact convex portion is pressed and returned by the corresponding restriction concave portion so as to enable the slider to rise to its original height. Here, during the returning operation, the slider is slightly inclined with respect to the tubular case while rising up. Therefore, when the contact convex portion is inserted into the corresponding restriction concave portion, the contact convex portion slides along the inclined surface of the restriction concave portion, and a very slight impact noise occurs when the slider collides with the tubular case. In addition, in order for the contact convex portion to be guided by the corresponding inclined surface of the restriction concave portion and to be returned to its substantially fitted state, the slider biased by the elastic member is automatically returned by the tubular case to a predetermined non-operation position without a wobble.

### SUMMARY

However, in the existing push switch described above, the restriction concave portion and the contact convex portions have complementary shapes to each other so that the contact convex portion of the slider can be substantially fitted in the restriction concave portion of the tubular case. However, errors of mold sizes in the tubular case and the slider may exist. Accordingly, a slight unevenness can be expected at a point where the restriction concave portion and the contact convex portion are engaged in a non-operation state. Specifically, in the prior art described above, due to the errors of the mold sizes unevenness may easily occur in the non-operation position of the slider and when large errors exist there is a concern that the slider may wobble in the non-operation state. In addition, the molds of the tubular case and the slider need to be manufactured with high precision in order to suppress the errors of the mold sizes as much as possible. Accordingly, mold cost increases and there is a problem in that the push switch cannot be manufactured at low cost.

It is desirable to provide a push switch capable of effectively suppressing a position deviation or a wobble of a slider caused by errors of mold sizes as well as reducing mold cost. It is also desirable to provide a method of manufacturing the push switch.

According to an aspect of the invention, there is provided a push switch including: a tubular case; a slider which is supported by the tubular case to reciprocate and advance during a pushing operation; and biasing means for biasing the slider to retreat, wherein the slider upon retreating is automatically returned to a non-operation position by allowing a contact inclined surface provided at a contact portion of the slider to come in contact with a restriction inclined surface provided at a restriction portion of the tubular case, the slider is a mold made of a resin material having a higher thermal contraction coefficient and a lower melting temperature than those of the resin material of the tubular case, the shape of the contact portion is similar to and slightly smaller than the shape of the restriction portion in order that they be complementary to each other, and the tubular case is provided with a pair of restriction inclined surfaces having an interval therebetween which increases in a retreat direction.

In the push switch having the above-mentioned configuration, since the resin material of the slider has a higher thermal contraction coefficient and a lower melting temperature than those of the resin material of the tubular case, the slider can be molded by two shot injection molding for injection-molding the resin of the latter in a cavity which forms the tubular case as a part of the mold and cooling the resin to be solidified. Accordingly, the contact portions of the slider can be formed with high precision as shapes similar to and slightly smaller than the complementary shapes of the restriction portions of the tubular case. Therefore unevenness in the points where the restriction inclined surfaces and the contact inclined surface are engaged does not exist in the non-operation state, so that position deviation or wobble of the slider caused by errors in mold sizes can be effectively suppressed. In addition, by using the tubular case as the part of the mold for molding the slider, mold cost can be reduced, so that the push switch can be manufactured at low cost.

Here, a reason will be described why the slider is surely pressed and returned to a non-operation position upon retreating after a pushing operation. Typically, since the clearance needed to allow the slider to properly reciprocate has to be guaranteed between the tubular case and the slider, the slider is slightly inclined with respect to the tubular case during the retreating operation. Accordingly, plural contact inclined surfaces which are provided to the slider hardly come in contact with the corresponding restriction inclined surfaces of the tubular case at the same time. Therefore, some contact inclined surfaces are first in contact with the corresponding restriction inclined surfaces and slide along the restriction inclined surface to correct the slope of the slider. Specifically, since the slider is guided by the restriction inclined surface and pressed to be returned to a non-operation position, a very slight impact noise occurs due to the collision of the slider with the tubular case, and the slider can be automatically returned to the predetermined non-operation position. In addition, since the interval between the restriction inclined surfaces which form a pair increases in the retreat direction, the wobble of the slider can be effectively suppressed by restricting the position of the restriction inclined surface.

In the push switch having the above-mentioned configuration, the tubular case is provided with an insertion opening through which a small diameter section of the slider is inserted, the restriction portions are recessed at an inner peripheral wall of the insertion opening, and the interval between the restriction inclined surfaces which form a pair increases in an inward direction of the restriction portions, the direction being substantially perpendicular to the retreat direction. Accordingly, the position of the slider in the non-operation state can be restricted by a pair of restriction inclined surfaces in an extension direction of the restriction portions and also in the inward direction of the restriction portions, which is preferable. Moreover, when the restriction portions are recessed at the insertion opening, the mold shape of the tubular case can be simplified, and it becomes easy to mold the contact portions of the slider using two shot injection molding.

According to another aspect of the invention, there is provided a method of manufacturing a push switch including a slider which has a contact inclined surface, is supported by a tubular case having a restriction inclined surface to reciprocate, advances during a pushing operation, and is automatically returned to a non-operation position by allowing the contact inclined surface of the slider to come in contact with the restriction inclined surface upon retreating; the method including: injection-molding the first resin in the first cavity and cooling the first resin to be solidified to form the tubular case provided with restriction portions including a pair of restriction inclined surfaces having an interval therebetween which increases in a retreat direction; and injection-molding a second resin which has a higher thermal contraction coefficient and a lower melting temperature than those of the first resin in a second cavity to form the tubular case as a part of the mold, and cooling the second resin to be solidified, to form the slider provided with a contact portion with a shape similar to and slightly smaller than the shape of the restriction portion in order that they be complementary to each other.

As described above, when the slider is molded using two shot injection molding for injection-molding the second resin with a higher thermal contraction coefficient and a lower melting temperature than those of the first resin in the cavity for forming the tubular case as the part of the mold, after molding the tubular case made of the first resin, and cooling the second resin to be solidified, the contact portion of the slider can be formed with high precision as a shape slightly smaller than and similar to the complementary shape of the restriction portion of the tubular case. Accordingly, in the push switch configured by assembling the tubular case and the slider, unevenness in points where the restriction inclined surfaces and the contact inclined surfaces are engaged does not exist in the non-operation state, so that position deviation or wobble of the slider caused by errors in mold sizes can be effectively suppressed. In addition, by using the tubular case as the part of the mold for molding the slider, mold cost can be reduced, so that the push switch can be manufactured at low cost.

In the push switch, the slider can be molded using two shot injection molding for injection-molding the resin in the cavity for forming the tubular case as the part of the mold, and cooling the resin to be solidified. Therefore, the contact portion of the slider can be formed with high precision as a shape slightly smaller than and similar to the complementary shape of the restriction portion of the tubular case. Accordingly, unevenness in the points where the restriction inclined surfaces and the contact inclined surfaces are engaged does not exist in the non-operation state, so that position deviation or wobble of the slider caused by errors in mold sizes can be effectively suppressed. In addition, by using the tubular case as the part of the mold for molding the slider, mold cost can be reduced, so that the push switch can be manufactured at low cost.

In the method of manufacturing the push switch, the slider is molded using two shot injection molding for injection-molding the second resin with a higher thermal contraction coefficient and a lower melting temperature than those of the first resin in the cavity for forming the tubular case as the part of the mold, after molding the tubular case made of the first resin, and cooling the second resin to be solidified. Therefore, the contact portion of the slider can be formed with high precision as a shape slightly smaller than and similar to the complementary shape of the restriction portion of the tubular case. Accordingly, in the push switch configured by assembling the tubular case and the slider unevenness in points where the restriction inclined surfaces and the contact inclined surfaces are engaged does not exist in the non-operation state, so that position deviation or wobble of the slider caused by errors in mold sizes can be effectively suppressed. In addition, by using the tubular case as the part of the mold for molding the slider, mold cost can be reduced, so that the push switch can be manufactured at low cost.

### BRIEF DESCRIPTION OF THE DRAWINGS

Fig. 1 is an external view of a push switch according to a first embodiment of the invention.
Fig. 2 is an exploded perspective view illustrating a tubular case and a slider according to the first embodiment.
Fig. 3 is a top view of the push switch according to the first embodiment.
Fig. 4 is a sectional view taken along the line A-A of Fig. 3.
Fig. 5 is a sectional view taken along the line B-B of Fig. 3.
Fig. 6 is a sectional view for explaining a returning operation of the push switch after a pushing operation according to the first embodiment.
Fig. 7 is a view illustrating a manufacturing process of the push switch according to the first embodiment.
Fig. 8 is a view illustrating a manufacturing process of the push switch according to the first embodiment.
Fig. 9 is a sectional view of a push switch according to a second embodiment of the invention.

### DESCRIPTION OF EXEMPLARY EMBODIMENTS

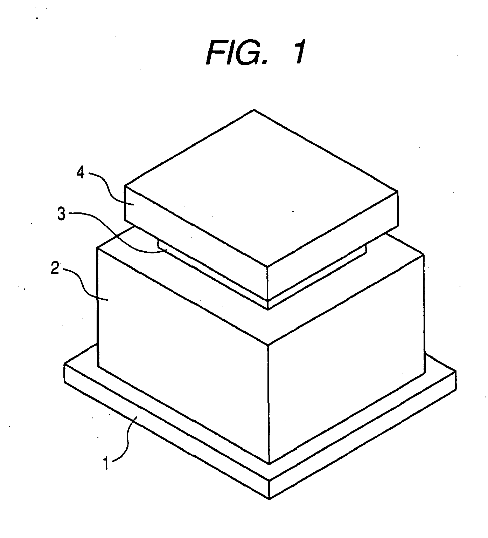

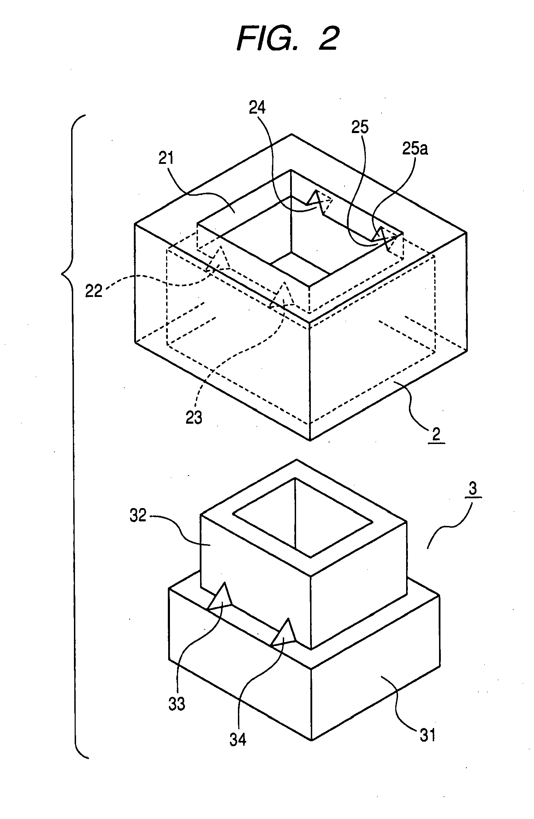

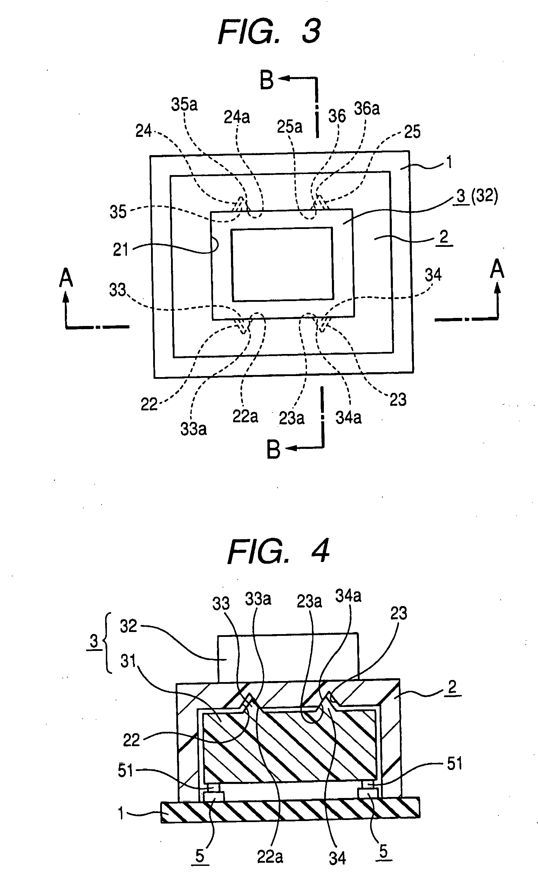

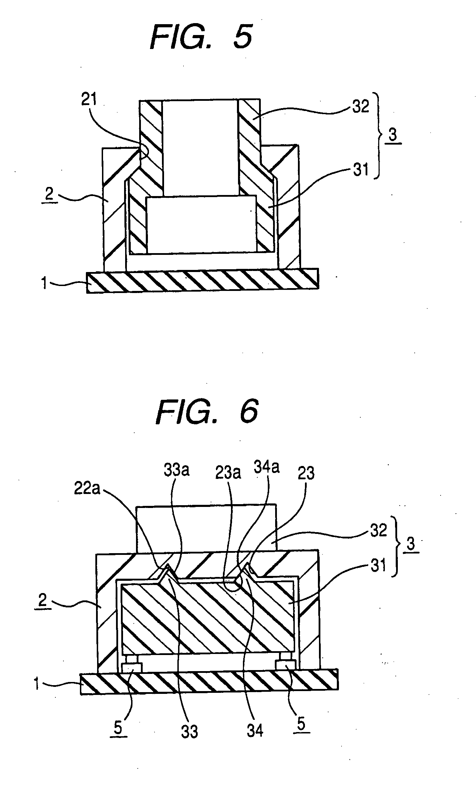

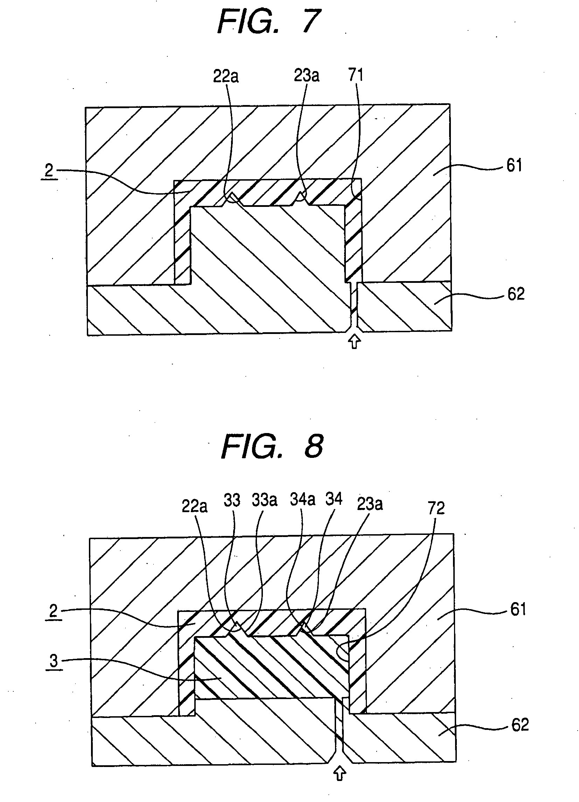

Exemplary embodiments of the invention will be described with reference to the accompanying drawings. Fig. 1 is an external view of a push switch according to a first embodiment of the invention. Fig. 2 is an exploded perspective view illustrating a tubular case and a slider according to the first embodiment. Fig. 3 is a top view of the push switch according to the first embodiment,
where an operating knob is omitted. Fig. 4 is a sectional view taken along the line A-A of Fig. 3. Fig. 5 is a sectional view taken along the line B-B of Fig. 3. Fig. 6 is a sectional view for explaining a returning operation of the push switch after a pushing operation. Fig. 7 is a view illustrating a manufacturing process of the tubular case of the push switch. Fig. 8 is a view illustrating a manufacturing process of the slider of the push switch.

The push switch illustrated in Figs. 1 to 5 mainly includes a base 1 on which a plurality of tact switches 5 is disposed, a tubular case 2 mounted on the base 1, a slider 3 supported by the tubular case 2 for raising and lowering (to reciprocate), and an operating knob 4 mounted to the slider 3. In the push switch, when the operating knob 4 is pushed to lower (advance) the slider 3, the tact switch 5 is driven by the slider 3 and turned on. When the pushing force is removed, the slider 3 is pushed up by the biasing force of an elastic member not shown included in the tact switch 5. Therefore, the tact switch 5 is returned to an OFF state, and the slider 3 raises (retreats) to its original height.

On the base 1, a wiring pattern and a terminal portion not shown are formed and the tact switch 5 is electrically connected to the wiring pattern. The tact switch 5 has a movable portion 51 which can be raised and lowered. When the movable portion 51 is pushed down against the basing force of the elastic member, a moving contact comes in contact with a fixed contact inside the tact switch 5 to output an ON signal. Here, as the base 1, a part of a printed-circuit board can be used.

The tubular case 2 is a resin mold having a substantially rectangular tube shape. At a top surface thereof, a rectangular insertion opening (upper opening) 21 is provided. Restriction concave portions 22 and 23 are recessed at two points in one surface of an inner peripheral wall of the insertion opening 21, and restriction concave portions 24 and 25 are recessed at two points in an opposing surface. The four restriction concave portions 22 to 25 are shaped into triangular pyramids having the same size. Of the restriction concave portions 22 and 23 formed next to each other in the one surface of the tubular case 2, inner wall surfaces adjacent to each other are formed as a pair of restriction inclined surface 22a and 23a. The interval between the restriction inclined surfaces 22a and 23a increases in the retreat direction (upward direction), and also increases in an inward direction of the restriction concave portions 22 and 23, that is, in a direction toward the bottom (becoming more distant from the insertion opening 21), the direction being substantially perpendicular to the retreat direction (see Fig. 3). Similarly, of the restriction concave portions 24 and 25 formed next to each other in the opposing surface of the tubular case 2, inner wall surfaces adjacent to each other are formed as a pair of restriction inclined surfaces 24a and 25a. The interval between the restriction inclined surfaces 24a and 25a increases in the retreat direction (upward direction), and also increases in an inward direction of the restriction concave portions 24 and 25 which is substantially perpendicular to the retreat direction (see Fig. 3).

The slider 3 is a resin mold in which on a large diameter section 31 having a rectangular tube shape and a small diameter section 32 having a smaller rectangular tube shape are mounted. On the large diameter section 31, contact concave portions 33 to 36 are formed at four points around the small diameter section 32. The large diameter section 31 is accommodated in the tubular case 2 and mounted on the plurality of tact switches 5. The small diameter section 32 is inserted through the insertion opening 21 to protrude upward from the tubular case 2 and is crowned with the operating knob 4. The four contact convex portions 33 and 36 formed on the large diameter section 31 are triangular pyramids having the same size, the bottom surface of each triangular pyramid is disposed in the top surface of the large diameter section 31, and the inner surface of each triangular pyramid is disposed in an outer peripheral surface of the small diameter section 32. The four contact convex portions 33 and 36 are inserted into and engaged with the corresponding four restriction concave portions 22 to 25 of the tubular case 2 in a non-operation state. Here, the shapes of the contact convex portions 33 to 36 are not completely complementary to the shapes of the restriction concave portions 22 to 25, but are similar to and slightly smaller than the convex portions (triangular pyramids) complementary to the restriction concave portions 22 to 25.

Specifically, of the two adjacent contact convex portions 33 and 34 among the four contact convex portions 33 to 36, contact inclined surfaces 33a and 34a, which are outer wall surfaces opposing each other, come in contact with the restriction inclined surfaces 22a and 23a respectively of the tubular case 2. In addition, as illustrated in Fig. 4, in the non-operation state, the contact inclined surface 33a (the outer wall surface on the right side of the illustrated contact convex portion 33) is substantially in contact with the restriction inclined surface 22a, and the contact inclined surface 34a (the outer wall surface on the left side of the illustrated contact convex portion 34) is substantially in contact with the restriction inclined surface 23a. Therefore, in the non-operation state, the position of the slider 3 is restricted by the restriction inclined surfaces 22a and 23a in the direction (left and right direction of Fig. 3) in which the restriction concave portions 22 and 23 extend, and is also restricted in the inward direction (downward direction of Fig. 3) of the restriction concave portions 22 and 23. Similarly, of the adjacent two contact convex portions 35 and 36, the contact inclined surfaces 35a and 36a, which are the outer wall surfaces opposing each other, come in contact with the restriction inclined surfaces 24a and 25a respectively of the tubular case 2. In the non-operation state, the contact inclined surface 35a which is the outer surface on the one side is substantially in contact with the restriction inclined surface 24a, and the contact inclined surface 36a which is the outer surface on the other side is substantially in contact with the restriction inclined surface 25a. Therefore, in the non-operation state, the position of the slider 3 is restricted by the restriction inclined surfaces 24a and 25a in the direction (left and right direction of Fig. 3) in which the restriction concave portions 24 and 25 extend, and is also restricted in the inward direction (upward direction of Fig. 3) of the restriction concave portions 24 and 25.

In the push switch having the above-mentioned configuration, when the slider 3 is pushed through the operating knob 4, the large diameter section 31 of the slider 3 in the tubular case 2 is lowered (advances), the contact convex portions 33 to 36 deviate from the corresponding restriction concave portions 22 to 25, and the large diameter section 31 pushes the movable portion 51 to turn on the tact switch 5. Thereafter, when the pushing force is removed, the movable portion 51 is raised up by a biasing force of the elastic member included in the tact switch 5, and the tact switch 5 is returned to its OFF state. Simultaneously, the slider 3 is raised (caused to retreat) by the movable portion 51, the contact convex portions 33 to 36 are pressed and returned to the insides of the corresponding restriction concave portions 22 to 25 so as to enable the slider 3 to rise to its original height.

Typically, since the clearance needed to allow the slider 3 to properly reciprocate has to be guaranteed between the tubular case 2 and the slider 3, the slider 3 is slightly inclined with respect to the tubular case 2 during the returning operation (upon retreating). Accordingly, the four contact convex portions 33 to 36 which are provided to the slider 3 hardly come in contact with the corresponding restriction inclined surfaces 22a to 25a of the tubular case 2 at the same time. Therefore, as illustrated in Fig. 6, some contact convex portions (such as the contact convex portion 34) are first in contact with the corresponding restriction inclined surfaces 23a and slide along the restriction inclined surface 23a to correct the slope of the slider 3. Simultaneously, since the slider 3 is guided by the restriction inclined surface of the tubular case 2 and pressed to be returned, a very slight impact noise occurs due to the collision of the slider 3 with the tubular case 2, and the slider 3 can be automatically returned to a predetermined non-operation position. In addition, by restricting the positions of the restriction inclined surfaces 22a to 25a, the wobble of the slider 3 can be effectively prevented.

Next, the method of manufacturing the tubular case 2 and the slider 3 of the push switch will be described with reference to Figs. 7 and 8.

When the tubular case 2 is manufactured, as illustrated in Fig. 7, a molten PC (polycarbonate) is injected into a first cavity 71 configured between a first mold 61 and a second mold 62, and is cooled to cause solidification. Accordingly, the tubular case 2 is molded with substantially the same shape as that of the first cavity 71. Here, PC has a thermal contraction coefficient of about 1% and a melting temperature of about 260°C.

After molding the tubular case 2 made of PC as described above, two shot injection is performed using the tubular case 2 as a part of the mold to form the slider 3 made of polyacetal. Specifically, as illustrated in Fig. 8, a molten polyacetal is injected into a second cavity 72 configured between the first mold 61, the tubular case 2, and a third mold 63, and cooled to cause solidification, thereby forming the slider 3 having substantially the same shape as the second cavity 72. Since the polyacetal has a thermal contraction coefficient of about 2% and a melting temperature of 200 °C, the tubular case 2 is not softened and deformed during molding of the slider 3. In addition, when the slider 3 is molded as the polyacetal is cooled to cause solidification, the slider 3 is naturally detached from the tubular case 2. In addition, due to the difference in the thermal contraction coefficients, the contact convex portions 33 to 36 of the slider 3 are formed to have shapes slightly smaller than the convex portions (triangular pyramids) having complementary shapes to the restriction concave portions 22 to 25 of the tubular case 2.

As described above, in the push switch according to this embodiment, since the resin material of the slider 3 has a higher thermal contraction coefficient and a lower melting temperature than those of the resin material of the tubular case 2, the slider 3 can be molded by the two shot injection molding which forms the tubular case 2 as the part of the mold. Accordingly, the contact convex portions 33 to 36 of the slider 3 can be formed with high precision as shapes slightly smaller than the convex portions having complementary shapes to the restriction concave portions 22 to 25 of the tubular case 2. Therefore unevenness in the points where the restriction concave portions 22 to 25 and the contact convex portions 33 to 36 are engaged does not exist in the non-operation state, so that position deviation or wobble of the slider 3 caused by errors in mold sizes can be effectively suppressed. In addition, by using the tubular case 2 as the part of the mold for molding the slider 3, mold cost can be reduced, so that the push switch can be manufactured at low cost.

In addition, in the push switch according to this embodiment, the restriction concave portions 22 to 25 are recessed at the inner peripheral wall of insertion opening 21 of the tubular case 2. In addition, the restriction concave portions 22 to 25 are formed such that the interval between the restriction inclined surfaces 22a and 23a which form a pair or the interval between the restriction inclined surfaces 24a and 25a increases in the retreat direction (upward direction) and in the inward direction substantially perpendicular to this. Accordingly, the position of the slider 3 in the non-operation state can be restricted by the restriction inclined surfaces 22a to 25a in the right and left direction of Fig. 3 and also in the up and down direction of Fig. 3, thereby effectively suppressing the wobble of the slider 3 with this simple structure. Moreover, since the restriction concave portions 22 to 25 are recessed at the insertion opening 21, the mold shape of the tubular case 2 can be simplified, and as a result, it becomes easy to mold the contact convex portions 33 to 36 of the slider 3 using two shot injection molding.

In addition, according to this embodiment, the case where the resin material of the tubular case 2 is PC and the resin material of the slider 3 is polyacetal is described, however, it is needless to say that other suitable resin materials can be selected. In this case, when a material having a thermal contraction coefficient greater than that of the resin material of the tubular case by about 0.8 to 1.2% is selected as the resin material of the slider, detachability during molding and dimensional accuracy can be easily guaranteed, which is preferable. For example, the resin material of the tubular case 2 is acrylonitrile butadiene styrene (ABS) and the resin material of the slider 3 is polybutylene terephthalate (PBT).

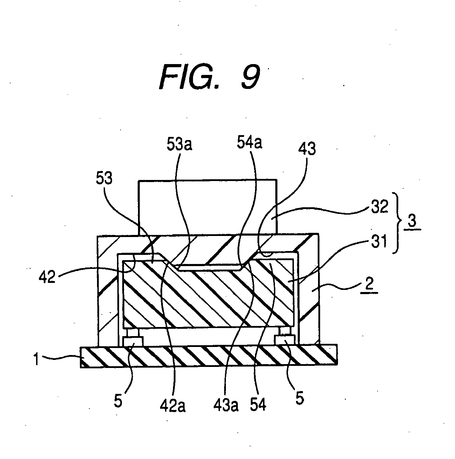

Fig. 9 is a sectional view illustrating the push switch according to a second embodiment of the invention, where an operating knob is omitted. Since like elements corresponding to Fig. 4 are denoted by like reference numerals, a detailed description thereof is omitted.

In the case of the push switch according to the second embodiment, the shapes of restriction portions 42 and 43 and the like of the tubular case 2 are different from those in the first embodiment, and accordingly, the shapes of contact portions 53 and 54 and the like, which are formed to be slightly smaller than and similar to the complementary shapes of the corresponding restriction portions, are different from those in the first embodiment. Specifically, in the second embodiment, the shapes of the restriction portions 42, 43 and the like provided at the insertion opening (upper opening) of the tubular case 2 are not triangular but trapezoidal, and accordingly, the shapes of the inner surfaces of the corresponding contact portions 53 and 54 and the like are also trapezoidal. Here, restriction inclined surfaces 42a and 43a and contact inclined portions 53a and 54a in the second embodiment are not basically different from those in the first embodiment, so that the operations of the push switch are substantially the same as those in the first embodiment. In addition, the method of manufacturing the push switch according to the second embodiment is substantially the same as that according to the first embodiment with the exception that the mold shape of the tubular case 2 is slightly different.

It should be understood by those skilled in the art that various modifications, combinations, sub-combinations and alterations may occur depending on design requirements and other factors insofar as they are within the scope of the appended claims.

## Claims

1. A push switch comprising:
a tubular case (2);
a slider (3) which is supported by the tubular case (2) to reciprocate and advance during a pushing operation;
and biasing means for biasing the slider (3) to retreat,
wherein the slider (3) upon retreating is automatically returned to a non-operation position by allowing a contact inclined surface (33a to 36a) provided at a contact portion (33 to 36) of the slider (3) to come in contact with a restriction inclined surface (22a to 25a) provided at the restriction portion (22 to 25) of the tubular case (2),
the shape of the contact portion (33 to 36) is similar to and slightly smaller than the shape of the restriction portion (22 to 25) in order that they be complementary to each other,
and the tubular case (2) is provided with a pair of restriction inclined surfaces (22a to 25a) having an interval therebetween which increases in a retreat direction,
**characterized in that**
the slider (3) is a mold made of a resin material having a higher thermal contraction coefficient and a lower melting temperature than those of the resin material of the tubular case (2).

2. The push switch according to claim 1,
wherein the tubular case (2) is provided with an insertion opening (21) through which a small diameter section (32) of the slider (3) is inserted,
the restriction portions (22 to 25) are recessed at an inner peripheral wall of the insertion opening (21), and
the interval between the restriction inclined surfaces (22a to 25a) which form a pair increases in an inward direction of the restriction portions (22 to 25), the direction being substantially perpendicular to the retreat direction.

3. The push switch according to claim 2, wherein the restriction portion (22 to 25) is formed into a triangular pyramid shape.

4. A method of manufacturing a push switch as defined in any of claims 1 to 3
the method comprising
injection-molding the first resin in the first cavity and cooling the first resin to cause solidification to form the tubular case (2) provided with restriction portions (22 to 25) including a pair of restriction inclined surfaces (22a to 25a) having an interval therebetween which increases in a retreat direction; and
injection-molding a second resin which has a higher thermal contraction coefficient and a lower melting temperature than those of the first resin in a second cavity for forming the tubular case (2) as a part of a mold, and cooling the second resin to cause solidification, to form the slider (3) provided with the contact portion (33 to 36) with a shape similar to and slightly smaller than the shape of the restriction portion (22 to 25) in order that they be complementary to each other.

## Patentansprüche

1. Drückschalter, aufweisend:
ein rohrförmiges Gehäuse (2);
ein Gleitstück (3), das von dem rohrförmigen Gehäuse (2) hin und her bewegbar abgestützt ist und sich während einer Druckbetätigung vorwärts bewegt; und
eine Vorspanneinrichtung zum Vorspannen des Gleitstücks (3) auf Zurückbewegung,
wobei das Gleitstück (3) bei der Zurückbewegung automatisch in eine unbetätigte Position zurückgeführt wird, indem eine geneigte Kontaktfläche (33a bis 36a), die an einem Kontaktbereich (33 bis 36) des Gleitstücks (3) vorgesehen ist, mit einer geneigten Begrenzungsfläche (22a bis 25a) in Kontakt treten kann, die in dem Begrenzungsbereich (22 bis 25) des rohrförmigen Gehäuses (2) vorgesehen ist,
wobei die Formgebung des Kontaktbereichs (33 bis 36) ähnlich der sowie geringfügig kleiner als die Formgebung des Begrenzungsbereichs (22 bis 25) ist, so dass sie zueinander komplementär sind,
und wobei das rohrförmige Gehäuse (2) mit einem Paar geneigter Begrenzungsflächen (22a bis 25a) versehen ist, zwischen denen ein Abstand vorhanden ist, der in Zurückbewegungsrichtung größer wird,
**dadurch gekennzeichnet,**
**dass** das Gleitstück (3) ein Formteil ist, das aus einem Harzmaterial hergestellt ist, das einen höheren thermischen Kontraktionskoeffizienten und eine niedrigere Schmelztemperatur als das Harzmaterial des rohrförmigen Gehäuses (2) aufweist.

2. Drückschalter nach Anspruch 1,
wobei das rohrförmige Gehäuse (2) mit einer Einsetzöffnung (21) versehen ist, durch die ein einen kleinen Durchmesser aufweisender Bereich (32) des Gleitstücks (3) eingesetzt ist,
wobei das rohrförmige Gehäuse (2) mit einer Einsetzöffnung (21) versehen ist, durch die ein einen kleinen Durchmesser aufweisender Bereich (32) des Gleitstücks (3) eingesetzt ist,
wobei die Begrenzungsbereiche (22 bis 25) in einer inneren Umfangswand der Einsetzöffnung (21) vertieft ausgebildet sind, und wobei der Abstand zwischen den geneigten Begrenzungsflächen (22a bis 25a), die ein Paar bilden, in Richtung von den Begrenzungsbereichen (22 bis 25) nach innen größer wird, wobei die Richtung im Wesentlichen rechtwinklig zu der Zurückbewegungsrichtung ist.

3. Drückschalter nach Anspruch 2,
wobei der Begrenzungsbereich (22 bis 25) in einer dreieckigen Pyramidenform ausgebildet ist.

4. Verfahren zum Herstellen eines Drückschalters nach einem der Ansprüche 1 bis 3,
wobei das Verfahren folgende Schritte aufweist:
Spritzgießen des ersten Harzes in den ersten Hohlraum und Abkühlen des ersten Harzes, um ein Erstarren zu bewirken und das rohrförmige Gehäuse (2) zu bilden, das mit Begrenzungsbereichen (22 bis 25) versehen ist, die ein Paar geneigter Begrenzungsflächen (22a bis 25a) beinhalten, zwischen denen ein Abstand vorhanden ist, der in einer Zurückbewegungsrichtung größer wird; und
Spritzgießen eines zweiten Harzes, das einen höheren thermischen Kontraktionskoeffizienten und eine niedrigere Schmelztemperatur als das erste Harz aufweist, in einen zweiten Hohlraum zum Bilden des rohrförmigen Gehäuses (2) als Teil eines Formteils, und Abkühlen des zweiten Harzes, um ein Erstarren zu bewirken und dadurch das Gleitstück (3) zu bilden, das mit dem Kontaktbereich (33 bis 36) mit einer ähnlichen und geringfügig kleineren Form als der Form des Begrenzungsbereichs (22 bis 25) versehen ist, so dass diese zueinander komplementär sind.

## Revendications

1. Bouton poussoir comprenant :
un boîtier tubulaire (2) ;
un curseur (3) qui est supporté par le boîtier tubulaire (2) pour aller et venir et avancer pendant une opération de pression ;
et un moyen de sollicitation pour forcer le curseur (3) à se retirer,
dans lequel le curseur (3), après son retrait, revient automatiquement à une position non opérationnelle en permettant à une surface de contact inclinée (33a à 36a) placée au niveau d'une partie de contact (33 à 36) du curseur (3) de venir au contact d'une surface de restriction inclinée (22a à 25a) placée au niveau de la partie de restriction (22 à 25) du boîtier tubulaire (2),
la forme de la partie de contact (33 à 36) est similaire à et légèrement plus petite que la forme de la partie de restriction (22 à 25) afin qu'elles soient complémentaires l'une de l'autre,
et le boîtier tubulaire (2) est pourvu d'une paire de surfaces de restriction inclinées (22a à 25a) ayant un intervalle entre elles qui augmente dans une direction de retrait,
**caractérisé en ce que** le curseur (3) est un moule fait d'un matériau de type résine ayant un coefficient de contraction thermique élevé et une température de fusion inférieurs à ceux du matériau de type résine du boîtier tubulaire (2).

2. Bouton poussoir selon la revendication 1,
dans lequel le boîtier tubulaire (2) est pourvu d'une ouverture d'insertion (21) à travers laquelle on insère une section de petit diamètre (32) du curseur (3),
les parties de restriction (22 à 25) sont en retrait au niveau d'une paroi périphérique intérieure de l'ouverture d'insertion (21), et
l'intervalle entre les surfaces de restriction inclinées (22a à 25a) qui forment une paire augmente dans une direction intérieure par rapport aux parties de restriction (22 à 25), cette direction étant substantiellement perpendiculaire à la direction de retrait.

3. Bouton poussoir selon la revendication 2, dans lequel la partie de restriction (22 à 25) a une forme de pyramide triangulaire.

4. Procédé de fabrication d'un bouton poussoir tel que défini dans l'une quelconque des revendications 1 à 3, le procédé comprenant :
le moulage par injection de la première résine dans la première cavité et le refroidissement de la première résine pour provoquer sa solidification afin de former le boîtier tubulaire (2) pourvu de parties de restriction (22 à 25) comprenant une paire de surfaces de restriction inclinées (22a à 25a) ayant un intervalle entre elles qui augmente dans une direction de retrait ; et
le moulage par injection d'une deuxième résine qui a un coefficient de contraction thermique plus élevé et une température de fusion plus basse que ceux de la première résine dans une deuxième cavité pour former le boîtier tubulaire (2) en tant que partie d'un moule, et le refroidissement de la deuxième résine pour provoquer sa solidification, afin de former le curseur (3) pourvu de la partie de contact (33 à 36) avec une forme similaire à et légèrement plus petite que la forme de la partie de restriction (22 à 25) afin qu'elles soient complémentaires l'une de l'autre.
